# EUROPÄISCHE PATENTSCHRIFT

(11) **EP 2 828 701 B1**
(45) Veröffentlichungstag und Bekanntmachung des Hinweises auf die Patenterteilung: **11.05.2016**
(21) Anmeldenummer: 13712197.6
(22) Anmeldetag: 20.03.2013
(51) Int. Cl.: G02B 7/18, G02B 26/08

(54) **MIKROSPIEGELANORDNUNG UND VERFAHREN ZUR HERSTELLUNG EINER MIKROSPIEGELANORDNUNG**
MICROMIRROR ARRANGEMENT, AND METHOD FOR PRODUCING A MICROMIRROR ARRANGEMENT
SYSTÈME DE MICROMIROIR ET PROCÉDÉ DE FABRICATION D'UN SYSTÈME DE MICROMIROIR

(30) Priorität: 21.03.2012 DE 102012005546
(43) Veröffentlichungstag der Anmeldung: 28.01.2015
(73) Patentinhaber: FRAUNHOFER-GESELLSCHAFT zur Förderung der angewandten Forschung e.V., 80636 Munich (DE)
(72) Erfinder: HOFMANN, Ulrich, 25524 Itzehoe (DE); QUENZER, Hans-Joachim, 25524 Itzehoe (DE); JANES, Joachim, 25524 Itzehoe (DE); JENSEN, Björn, 25524 Itzehoe (DE)
(74) Vertreter: Pfenning, Meinig & Partner mbB
(86) Internationale Anmeldenummer: PCT/EP2013/055852
(87) Internationale Veröffentlichungsnummer: WO 2013/139866

(56) Entgegenhaltungen:
- EP-A2- 1 674 913
- WO-A2-2010/079133
- DE-A1-102008 049 556

## Beschreibung

Die Erfindung betrifft eine Mikrospiegelanordnung nach dem Oberbegriff des Hauptanspruchs und ein Verfahren zur Herstellung einer solchen Mikrospiegelanordnung.

Mikrotechnisch hergestellte Strahlablenkspiegel, sogenannte MEMS-Scanner, werden für eine Vielzahl von Applikationen eingesetzt, wie beispielsweise Laser-Projektions-Displays, Barcode-Scanner, Mikroskope, OCT-Endoskope, LIDAR-Scanner, Imaging-Spektrometer und andere. Die als Mikroaktuatoren ausgebildeten Strahlablenkspiegel umfassen beispielsweise einen Schwingungskörper, der als Spiegel ausgebildet ist und der über eine mehrere Federelemente in einem Chiprahmen schwingfähig aufgehängt ist. Der Chiprahmen kann dabei einseitig geschlossen sein, wobei Spiegelplatte und Federelemente in einem Hohlraum angeordnet sind. Der Chiprahmen kann aber auch beidseitig mit einem Glasdeckel verkapselt sein.

Solche Mikrospiegelanordnungen oder Strahlablenkspiegel haben üblicherweise sehr geringe Trägheitsmomente, die es solchen miniaturisierten Strahlablenksystemen erlauben, sehr hohe Scan-Geschwindigkeiten bis zu 100 kHz zu erreichen. Durch einen Betrieb in Resonanz können trotz sehr beschränkter Antriebskräfte hinreichend große Ablenkwinkel erzeugt werden. Dieser Vorteil ist besonders in der Display-Technik von großem Nutzen.

Es gibt jedoch auch Anwendungen, in denen MEMS-Scanner bzw. Mikroaktuatoren bislang nicht erfolgreich eingesetzt werden können und stattdessen immer noch konventionell gefertigten Galvanometer-Scannern der Vorzug gegeben wird. Hierzu gehören zunächst einmal alle Vektor-Scan-Applikationen, bei denen auf Resonanzbetrieb verzichten werden muss. Aber auch für alle Anwendungen, in denen Laserleistungen oberhalb von einigen wenigen Watt von dem Strahlablenksystem verarbeitet werden müssen, kommen bislang nicht MEMS-Scanner sondern herkömmliche Galvanometer-Scanner zum Einsatz. Schließlich muss bislang auch auf Galvanometer-Scanner zurückgegriffen werden, in allen Anwendungen, in denen der zu scannende Laserstrahl einen Durchmesser oberhalb von 5 mm aufweist.

Diese genannten Einschränkungen lassen sich letztlich auf eine Ursache zurückführen:
Mikrotechnisch gefertigte Strahlablenksysteme verfügen über Kräfte, welche um viele Größenordnungen geringer sind, als in konventionell hergestellten makroskopischen Scannern zur Verfügung stehen. Daraus ergibt sich zwangsläufig, dass die Trägheitsmomente von MEMS-Scannern entsprechend geringer sein müssen, um nennenswerte Auslenkungen und somit Strahlablenkungen zu erzielen. Daher sind enge Grenzen in Hinsicht auf Spiegeldurchmesser, Spiegeldicke und Federquerschnitte von MEMS-Spiegeln gesetzt. Die daraus resultierende geringe Wärmekapazität von MEMS-Scannern und die geringe Wärmeleistung, die über die dünnen Federquerschnitte zur Umgebung abgeführt werden können, erlaubten bislang nicht den Einsatz dieser MEMS-Spiegel in der Laser-Material-Bearbeitung, wo häufig Laserleistungen bis zu mehreren Kilowatt zum Einsatz kommen.

Selbst herkömmliche Spiegel müssen mit aufwendigen dielektrischen Vielschicht-Stapeln beschichtet werden, um eine möglichst hohe Reflektivität von >99% zu erreichen und damit thermische Belastungen des Spiegels durch Absorption möglichst klein gehalten werden. Diese Schichtstapel erzeugen hohe mechanische Stressgradienten, welche die Spiegelplatte in unerwünschter Weise deformieren. Die Deformation ist umso höher, je dünner der Spiegel ist. MEMS-Spiegel haben typischerweise ein Verhältnis von Spiegeldicke zu Durchmesser von eins zu zehn, d.h. ein Spiegel von mehreren Millimetern Durchmesser, die auf die genannte Weise zu beschichten wären, müssten eine Spiegeldicke von bis zu mehreren Zehntel Millimetern besitzen, was jedoch aufgrund der damit erhöhten Trägheitsmomente Antriebskräfte voraussetzt, die in einem MEMS-Bauelement nicht erreicht werden können.

Aus der DE 10 2007 034 652 A1 ist eine Spiegelanordnung bekannt, die ein in einer Kammer aufgenommenes optisches Element und ein die Kammerwände bildendes Substrat und mindestens eine transparenten Abdeckung aufweist. Um die mit dem eingestrahlten Licht zusammenhängende Erwärmung der Oberfläche des optischen Elements abzuführen, ist in der Kammer ein Medium zur Wärmeableitung vorgesehen und außerdem sind die Kammerwände gekühlt, beispielsweise mit Kühlkanälen durchzogen, durch die ein Kühlgas oder eine Kühlflüssigkeit durchgeleitet wird.

Weitere Spiegelanordnungen mit Kühlmöglichkeit sind aus WO 2010/079133 und DE 10 2008 049 556 A1 bekannt.

Der Erfindung liegt die Aufgabe zugrunde, eine Mikrospiegelanordnung mit einer über mindestens ein Federelement schwingend aufgehängten Spiegelplatte zu schaffen, bei der die Wärmeableitung von der Spiegelplatte verbessert wird, um vergleichsweise große Durchmesser der aktiven Spiegelplatte zu realisieren, dynamische und statische Deformationen gering zu halten und große Scan-Amplituden zu erreichen und eine hohe Toleranz gegenüber dem Wärmeeintrag zu gewährleisten.

Die Aufgabe wird erfindungsgemäß durch die kennzeichnenden Merkmale des Hauptanspruchs in Verbindung mit den Merkmalen des Oberbegriffs und entsprechend durch die Merkmale der nebengeordneten Verfahrensansprüche gelöst.

Durch die in den Unteransprüchen angegebenen Maßnahmen sind vorteilhafte Weiterbildungen und Verbesserungen möglich.

Dadurch, dass erfindungsgemäß bei einer Mikrospiegelanordnung mit mindestens einer in einem Chiprahmen über ein oder mehrere Federelemente schwingfähig aufgehängten Spiegelplatte mindestens ein mit einer Ein- und einer Auslassöffnung versehener Mikrokanal zum Durchleiten eines strömenden Kühlmediums, beispielsweise Flüssigkeit oder Gas, in dem Chiprahmen und in dem einen oder mehreren Federelementen oder in beiden und zusätzlich in der mindestens einen Spiegelplatte angeordnet ist, ist es möglich, über das in dem Mikrokanal geführte Kühlmedium Wärme abzuführen. Dabei wird als Kühlmedium ein gasförmiges oder flüssiges oder mehrphasiges Medium verwendet, das mit Hilfe eines Druckgefälles durch den Kanal so hindurchgeleitet werden kann, dass ein Temperaturgradient zwischen den genannten Bestandteilen, insbesondere Federaufhängung und Spiegelplatte und durchströmendem Medium dazu ausgenutzt werden kann, konvektiv die Wärme abzuführen. Es wird eine laterale Wärmeabfuhr realisiert, wobei die Wärme über die Federn zum umgebenden Substrat transportiert wird. Als strömendes Kühlmedium kann beispielsweise Druckluft, Helium, Wasser und andere Fluid-Medien verwendet werden, die vorzugsweise über eine hohe Wärmekapazität verfügen. Aufgrund der Wärmeabfuhr wird es möglich, MEMS-Spiegel auch für hohe Lichtleistungen zu realisieren und dynamische und statische Spiegeldeformationen gering zu halten. Dadurch können sich andere Anwendungsgebiete ergeben, beispielsweise Lasermaterial-Bearbeitung und vergleichbare Hochleistungs-Laser-Applikationen, die dann mit Bauelementen der Mikrotechnik realisiert werden können. Damit ergeben sich für die Fertigung viele Vorteile und eine kostengünstige Massenfertigung ist denkbar.

Erfindungsgemäß sind die Ein- und die Auslassöffnung an einer Seite des Chiprahmens oder an unterschiedlichen Seiten des Chiprahmens angeordnet, wodurch sich unterschiedliche Konstruktionsmöglichkeiten ergeben. Beispielsweise kann eine Spiegelplatte, die nur an einem Federelement aufgehängt ist, realisiert werden, wobei der Kanal schleifenförmig, vorzugsweise über die Spiegelplatte, an dieselbe Seite des Chiprahmens zurückgeführt werden kann. Es ist jedoch auch möglich, die Spiegelplatte an zwei gegenüberliegende Federelemente aufzuhängen, wodurch der Mikrokanal an der einen Seite des Chiprahmens seine Einlassöffnung und auf der anderen Seite des Chiprahmens seine Auslassöffnung haben kann. Auch sind ein- oder mehrachsig aufgehängte Spiegelplatten realisierbar.

In vorteilhaften Ausführungsbeispielen können die Einlassöffnung und die Auslassöffnung des mindestens einen Mikrokanals in Längsrichtung des sich an die jeweilige Öffnung anschließenden Teils des Mikrokanals gerichtet sein oder in einem weiteren Ausführungsbeispiel können die Einlassöffnung und/oder die Auslassöffnung in einer zu der Längsrichtung mit einem nicht verschwindenden Winkel, vorzugsweise mit einem Winkel von 90°, abgewinkelten Richtung verlaufen. Auch durch diese Ausführungsformen werden die Konstruktionsmöglichkeiten verbessert und die Kühlmediumzu- bzw. -abfuhr können an die Umgebungsgegebenheiten angepasst werden.

Vorzugsweise kann der Verlauf des mindestens einen Mikrokanals in dem Chiprahmen und/oder dem einen oder mehreren Federelementen und/oder der mindestens einen Spiegelplatte schleifenförmig oder verzweigt ausgebildet sein. Dadurch kann die realisierte Wärmeableitung an den zu erwartenden Wärmeeintrag angepasst werden, so dass die Funktionssicherheit der Mikrospiegelanordnung gewährleistet ist.

In einem bevorzugten Ausführungsbeispiele ist der Chiprahmen oberseitig und/oder unterseitig mit einem mit einer Kavität versehenen Deckel verbunden, derart, dass mindestens ein Teil des Chiprahmens das eine oder die mehreren Federelemente und die mindestens eine Spiegelplatte in einem Hohlraum gekapselt sind. Dadurch, dass durch die Kapselung, die vorzugsweise auf Waferebene vorgenommen wird, dicht, vorzugsweise hermetisch dicht ist, kann der als Spiegel ausgebildete Mikroaktuator gegen Verunreinigungen geschützt werden. Weiterhin kann dadurch der Hohlraum unter Vakuum gesetzt werden oder mit Luft oder einem anderen Gas, wie Helium gefüllt sein. Durch die Vakuum-Kapselung wird einerseits erreicht, dass der Fluss der strömenden Kühlmedien nicht in den Hohlraum bzw. die Vakuum-Kavität eindringt, sondern nur in dem Mikrokanal verläuft. Andererseits kann durch die Vakuum-Kapselung die viskose Reibung des MEMS-Spiegels deutlich reduziert werden, wodurch sich eine sehr effektive Energienutzung für die üblicherweise verfügbaren elektrostatischen, elektromagnetischen, piezoelektrischen oder thermomechanischen Antriebe ergibt, vor allem im Falle eines resonanten Betriebs. In anderen Anwendungen kann es zur weiteren Wärmeableitung nützlich sein, den Hohlraum der Kapselung mit Luft oder dem anderen Gas, wie Helium, zu füllen.

Zum Zuführen und Abführen des Mediumstroms für die Kühlung sind die Ein- und die Auslassöffnung mit einer Zuleitung bzw. mit einer Abführleitung verbunden, wobei die Öffnungen mit den Leitungen am Chiprahmen außerhalb der Kapselung, d.h. außerhalb der Deckel, angeordnet sind.

Wie schon ausgeführt, ist die Mikrospiegelanordnung zum Ablenken von Laserlicht ausgebildet, wobei die Spiegelplatte ein- oder mehrachsig aufgehängt sein kann. Durch die beschriebene erfindungsgemäße Anordnung der Spiegel im Vakuum können auch sehr große und massive Spiegel mit Durchmessern von >5 mm mit vergleichsweise großen Auslenkwinkeln betrieben werden.

Vorzugsweise kann der hermetisch dichte Mikrokanal auf der Einströmseite, d.h. an der Einlassöffnung mit einer Verengung versehen sein, um eine zusätzliche Kühlung durch die Expansion des Kühlmediums, vorzugsweise Gas, zu gewinnen.

Die erfindungsgemäße Ausbildung des aus Chiprahmen, Federelementen und mindestens einer Spiegelplatte gebildetem Mikroaktuator ermöglicht die vielfältigsten Anwendungen und Ausbildungen.

Die Erfindung betrifft auch ein Verfahren zur Herstellung einer Mikrospiegelanordnung, wie sie oben beschrieben ist, bei dem die Oberfläche eines Siliziumwafers unter Verwendung eines vorzugsweise anisotropen Plasmaätzens entsprechend dem geometrischen Verlauf des Mikrokanals strukturiert wird. Anschließend wird ein Hohlraum unterhalb der eingebrachten Struktur durch ein vorzugsweise isotropes Plasmaätzen hergestellt und eine Siliziumschicht abgeschieden, wodurch die Struktur zur Oberfläche des Siliziumwafers verschlossen wird und ein Teil des Hohlraums verbleibt. Danach wird der so behandelte Siliziumwafer durch Ätzen zu einem Mikroaktuator mit dem oder den Federelementen und der mindestens einen Spiegelplatte strukturiert und durch Verbinden des Siliziumwafers mit einem eine Kavität aufweisenden Deckel und/oder einem weiteren einen Hohlraum aufweisenden Siliziumwafer und/oder einem weiteren eine Kavität aufweisenden Deckel verkapselt. Auf diese Weise kann in relativ einfacher Weise die erfindungsgemäße Mikrospiegelanordnung mit integriertem Mikrokanal realisiert werden.

Falls bei dem Schritt des Verschließens des Kanals an seiner Engstelle durch Abscheiden einer Polysiliziumschicht deren Oberfläche zu rau ist, kann in einem Zwischenschritt die Schicht poliert werden.

Ein weiteres Verfahren zur Herstellung einer Mikrospiegelanordnung nach der Erfindung sieht das Ätzen der Struktur eines Mikroaktuators mit Chiprahmen, dem oder den Federelementen und der mindestens einen Spiegelplatte von einer oder beiden Oberflächen eines Silizumwafers und das Ätzen des Querschnitts des Mikrokanals von einer Oberfläche des Siliziumwafers bis zu einer vorgegebenen Tiefe vor. Vorzugsweise wird ein SOI-Wafer (Silicon-Insulation-Wafer) verwendet, der eine Oxid-Stoppschicht enthält, so dass ein entsprechender Ätzprozess (Plasma-Silizium-Ätzprozess) zum Stoppen kommt, sobald die Schicht erreicht wird. Das hat den Vorteil, dass das Endergebnis hinsichtlich der Tiefe der Ätzung homogen und definiert ist. Anschließend wird ein mit einer Kavität versehener Deckel auf den Siliziumwafer aufgebracht, und zwar auf die Oberfläche des strukturierten Siliziumwafers, die der Oberfläche gegenüberliegt, von der der Mikrokanal geätzt wurde. Der geätzte Querschnitt des Mikrokanals wird durch Verbonden des durch die vorherigen Schritte hergestellten Siliziumwafers mit einem weiteren, entsprechend der Struktur des Mikroaktuators geätzten Siliziumwafer verschlossen. Für das Ätzen wird vorzugsweise das Plasma-Ätzen verwendet, es kann aber auch ein anderes Ätzverfahren, wie ein nasschemisches Ätzen in TMAH oder KOH angewandt werden. Auch mit diesem Verfahren wird eine Herstellungsmöglichkeit einer Mikrospiegelanordnung gemäß der Erfindung zur Verfügung gestellt.

In vorteilhafter Weise wird bei dem vorbenannten Verfahren der weitere Siliziumwafer ebenfalls mit den Schritten des Strukturierens des Mikroaktuators und des Ätzens des Querschnitts des Mikrokanals hergestellt und die zwei strukturierten Siliziumwafer werden mit ihren Oberflächen, von denen her der Mikrokanal geätzt wurde, so miteinander verbondet, dass der Mikrokanal hermetisch dicht abgeschlossen wird. Dies vereinfacht das Herstellungsverfahren, da zwei gleiche Siliziumwafer miteinander verbunden werden können.

In vorteilhafter Weise sind der oder die Deckel, mit denen der Mikroaktuator gekapselt wird, als Glaswafer ausgebildet, der auf die entsprechenden Siliziumwafer aufgebracht werden kann.

Bei dem jeweiligen erfindungsgemäßen Verfahren werden eine Vielzahl von Mikroaktuatoren auf Wafer-Ebene hergestellt, wobei auch die mehrere Deckel als Glasdeckelwafer ausgebildet sind und der weitere Siliziumwafer wird gegebenenfalls entsprechend der Vielzahl von Mikroaktuatoren strukturiert. Nach Aufeinanderbonden von Deckelwafer, MEMS-Wafer und Bodenwafer wird der fertige Wafer-Verbund vereinzelt und die Mikrokanäle der einzelnen Mikrospiegelanordnungen zugänglich gemacht. Somit kann auch eine Mehrzahl von Mikrospiegelanordnungen hergestellt werden.

Die Erfindung ist in der Zeichnung dargestellt und wird in der nachfolgenden Beschreibung näher erläutert. Es zeigen
- Fig. 1: eine schematische Ansicht eines ersten Ausführungsbeispiels einer erfindungsgemäßen Mikrospiegelanordnung in schematischer perspektivischer Ansicht mit einer einseitig aufgehängten Spiegelplatte,
- Fig. 2: ein zweites Ausführungsbeispiel einer erfindungsgemäßen Mikrospiegelanordnung in schematischer perspektivischer Ansicht mit zweiseitig aufgehängter einachsiger Spiegelplatte,
- Fig. 3: eine Mikrospiegelanordnung gemäß Fig. 2 mit oberseitigem und unterseitigem Deckel,
- Fig. 4: eine Mikrospiegetanordnung gemäß Fig. 3, jedoch mit oberseitigen Öffnungen für den Ein- und Auslass eines Kühlmediums,
- Fig. 5: eine Ansicht gemäß Fig. 4 mit das Kühlmedium führenden Leitungen und einem Getter,
- Fig. 6: eine Ansicht gemäß Fig. 5 mit einer zweiachsig schwingenden Spiegelplatte und verzweigtem Mikrokanal,
- Fig. 7: verschiedene Schritte eines ersten Verfahrens zur Herstellung einer Mikrospiegelanordnung,
- Fig. 8: verschiedene Schritte eines zweiten Verfahrens zur Herstellung einer Mikrospiegelanordnung,
- Fig. 9: verschiedene Schritte eines dritten Verfahrens zur Herstellung einer Mikrospiegelanordnung,

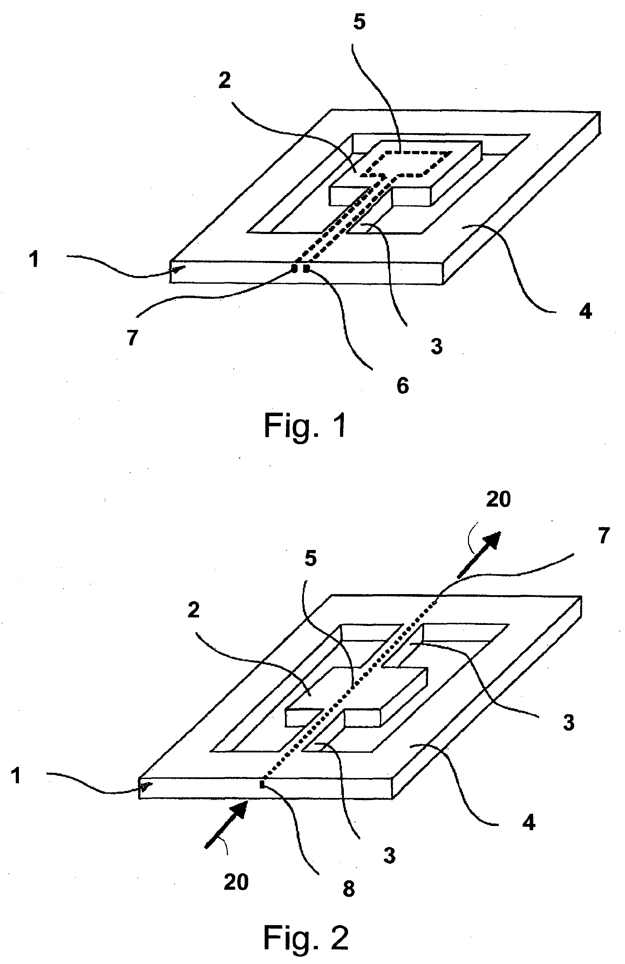

In Fig. 1 ist ein erstes Ausführungsbeispiel einer erfindungsgemäßen Mikrospiegelanordnung mit Mikroaktuator 1 dargestellt, der eine Spiegelplatte 2 aufweist, welche an einem eine Federaufhängung bildenden Federelement 3 in einem starren Chiprahmen 4 aufgehängt ist. Ein Mikrokanal 5 ist gestrichelt angedeutet und erstreckt sich von einer in der schmalen Seitenwand des Chiprahmens angeordneten Einlassöffnung 6 durch einen Schenkel des Chiprahmens 4, das Federelement 3, in einer umlaufenden Schleife in der Spiegelplatte 2, wieder zurück durch das Federelement 3 und den Schenkel des Chiprahmens 4 bis zu einer Auslassöffnung 7, die neben der Einlassöffnung 6 liegt. Die Einlassöffnung und die Auslassöffnung sind jeweils mit einer nicht dargestellten Versorgungseinheit für Kühlmedium verbunden, die geeignet ist, das Kühlmedium, das gasförmig, flüssig oder mehrphasig sein kann, mit Hilfe eines Druckgefälles durch den hermetisch dichten Mikrokanal 5 strömen zu lassen, so dass ein Temperaturgradient zwischen den genannten Teilen Spiegelplatte 2, Federelement 3 und Chiprahmen 4 und durchströmendem Kühlmedium dazu ausgenutzt werden kann, konvektiv Wärme abzuführen. Wie schon angegeben, handelt es sich bei dem dargestellten Mikroaktuator um einen beweglichen schwingfähigen Spiegel zur Ablenkung von Laserlicht.

Die Spiegelplatte 2 des Mikroaktuators 1 wird in bekannter Weise von einem elektrostatischen, elektromagnetischen, piezoelektrischen oder thermomechanischen Antrieb zu Schwingungen ausgelenkt.

In Fig. 2 ist ein weiteres Ausführungsbeispiel eines Mikroaktuators 1 dargestellt, der sich von dem nach Fig. 1 dadurch unterscheidet, dass die Spiegelplatte 2 an zwei sich bezüglich der Spiegelplatte gegenüberliegenden Federelementen 3 gemäß einer Schwingungsachse in dem Inneren des starren Chiprahmens 4 aufgehängt ist. Der Mikrokanal 5 erstreckt sich hier von einer schmalen Seite des Chiprahmens 4 geradlinig durch einen Schenkel des Chiprahmens 4, das erste Federelement 3, die Spiegelplatte 2, das zweite Federelement und den gegenüberliegenden Schenkel. Die Einlassöffnung 6 liegt dabei auf der einen schmalen Seite des Chiprahmens und die Auslassöffnung 7 liegt auf der gegenüberliegenden schmalen Seite des Chiprahmens 4, wobei die Strömungsrichtung des Kühlmediums durch die Pfeile 20 angedeutet ist. Der Mikrokanal 5 ist in diesem Ausführungsbeispiel geradlinig ausgebildet, er kann jedoch auch in einer oder mehreren Schleifen in der Spiegelplatte 2 angeordnet oder auch verzweigt sein.

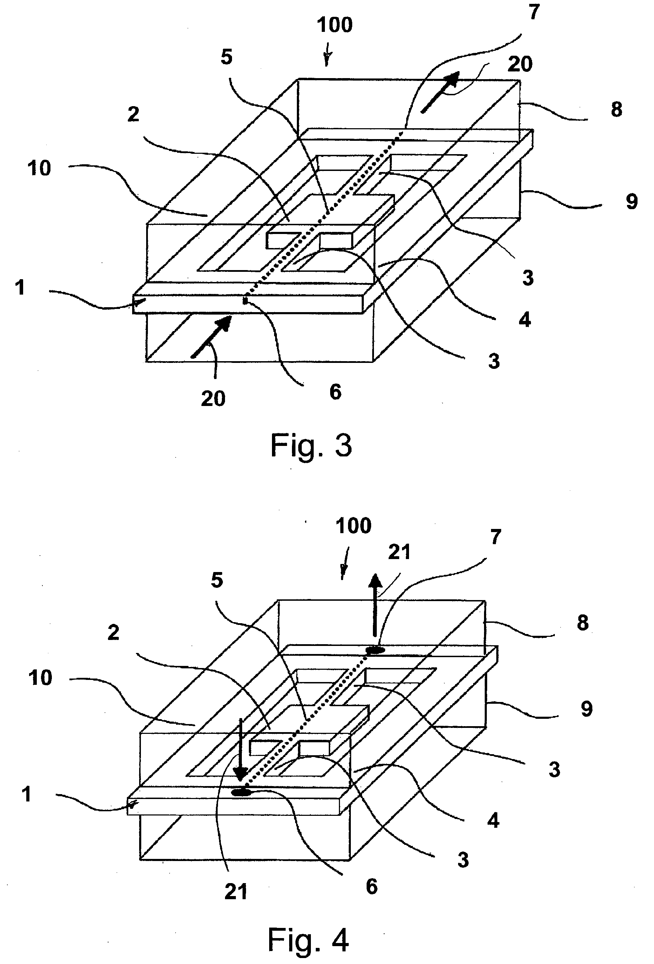

In Fig. 3 ist eine Mikrospiegelanordnung 100 dargestellt, bei der der Mikroaktuator 1 gemäß Fig. 2 mit zwei Deckeln 8, 9 versehen ist, wobei der Deckel 8 auf die Oberseite des Chiprahmens aufgebondet ist, während der Deckel 9 auf die Unterseite des Chiprahmens 4 aufgebondet ist. Somit ist der Mikroaktuator 1 im Wesentlichen vollständig in einer Kavität gekapselt. Die Bondung der Deckel 8, 9 kann dabei so durchgeführt sein, dass der Mikroaktuator 1 hermetisch dicht versiegelt ist, wobei in der Kavität Luft oder Gas eingeschlossen ist oder auch, wie später noch beschrieben, unter Vakuum gesetzt werden kann. Die Deckel 8, 9 stammen vorzugsweise von einem Glaswafer, d.h. sind transparent für sichtbares Licht und/oder Infrarotstrahlung, es ist jedoch auch denkbar, dass ein nichttransparenter Deckel, z.B. aus einem mit einem Hohlraum versehenen Siliziumwafer mit dem Chiprahmen 1 verbunden wird.

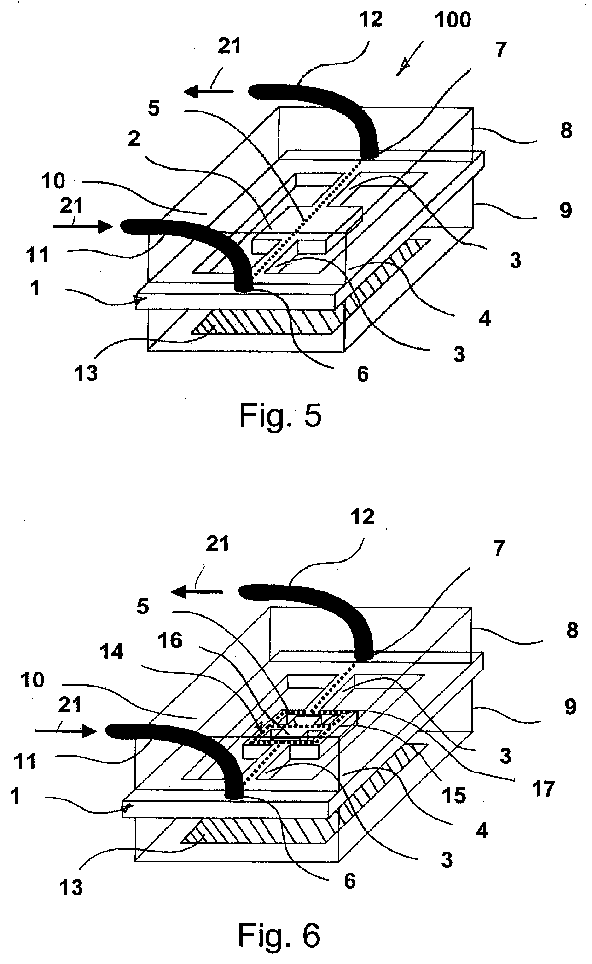

Fig. 4 zeigt eine Mikrospiegelanordnung 100, die sich von der nach Fig. 3 dadurch unterscheidet, dass die Einlassöffnung 6 und die Auslassöffnung 7 senkrecht zur Ebene des Chiprahmens 4, in der Zeichnung auf der Oberseite des Chiprahmens 4, eingebracht sind. Die Einströmungs- und Ausströmungsrichtung in und aus dem Mikrokanal 5 sind dabei durch die Pfeile 21 angedeutet. Eine solche Ausführung vereinfacht die Ankontaktierung einer Medienleitung, insbesondere wenn der zur Verfügung stehende Platz gering ist. In Fig. 5 ist eine solche Ausführungsform einer Mikrospiegelanordnung 100 mit an die Einlassöffnung 6 ankontaktierten Zufuhrschlauch 11 und Abführschlauch 12 für das zu- und abzuführende Kühlmedium dargestellt. Zusätzlich ist in der Kavität 10 ein Getter 13 in Form einer Metallschicht, z.B. aus Titan integriert, wodurch der Mikroaktuator 1 in einer Vakuumumgebung gekapselt werden kann. Dabei oxidiert die eingebrachte Metallschicht bei hoher Temperatur und bindet dabei vor allem O₂ und N₂, wodurch diese Moleküle nicht mehr zum Gasdruck beitragen.

In Fig. 6 ist ein weiteres Ausführungsbeispiel einer Mikrospiegelanordnung 100 dargestellt, das sich von dem nach Fig. 5 dadurch unterscheidet, dass sich die Spiegelplatte, die in diesem Ausführungsbeispiel mit 16 bezeichnet wird, unterscheidet. Ein Schwingungselement 14 weist einen äußeren Rahmen 15 auf und ein inneres, die Spiegelplatte 16 bildendes Schwingungselement ist an zwei Federelementen 17, die mit dem äußeren Rahmen 15 verbunden sind, aufgehängt. Dadurch wird eine Spiegelplatte 16, die um zwei Schwingachsen abgelenkt wird, erzeugt. Es wird somit ein Spiegel zur Verfügung gestellt, der ein einfallendes Laserlicht in zwei Achsen ablenken kann. Der Mikrokanal 5 wird in diesem Ausführungsbeispiel über das eine Federelement geführt, verzweigt sich entsprechend dem Rahmen 15 des Schwingungselementes 14 und verbindet sich wieder, um über das zweite Federelement 3 zur Auslassöffnung 7 zu gelangen. Außerdem verzweigt sich der Mikrokanal 5 an dem äußeren Rahmen 15, um durch die Federelemente 17 und die Spiegelplatte 16 hindurchgeführt zu werden.

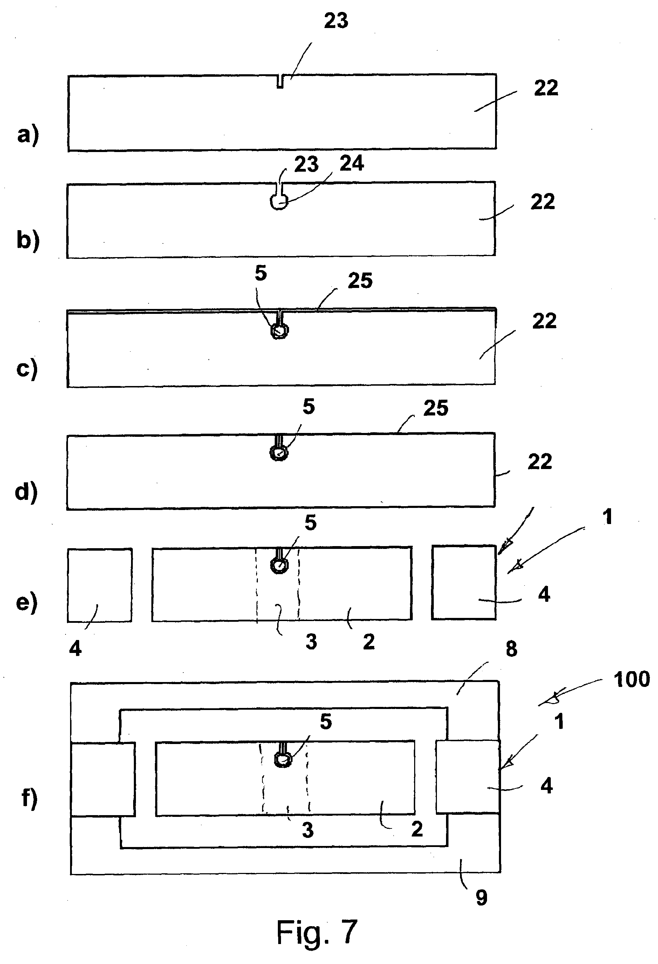

Ein bevorzugtes Ausführungsbeispiel eines Verfahrens zur Herstellung einer Mikrospiegelanordnung 100 bzw. eines Mikroaktuators 1, wie zuvor beschrieben, wird anhand von Fig. 7 näher beschrieben.

Der Ausgangsschritt a) zeigt einen Siliziumwafer 22, in den eine Nut 23 durch anisotropes Plasmaätzen eingebracht wird, die den geometrischen Verlauf des Mikrokanals 5 gemäß den Fign. 1 bis 6 angibt. Dann wird gemäß b) ein isotroper Plasmaätzschritt angewandt, d.h. das verwendete Ätzmittel arbeitet in allen Richtungen des Kristallgitters, um den eigentlichen Hohlraum 24 des Mikrokanals 5 unterhalb der Oberfläche des Siliziumwafers, d.h. sich an die Nut 23 anschließend, zu erzeugen. Dann wird gemäß c) eine Polysilizium-Schicht konform abgeschieden, beispielsweise durch eine Hochtemperatur-LPCVD-Abscheidung. Dabei wird die Nut, d.h. die zu dem Hohlraum 24 führende Engstelle, nach oben hin verschlossen, so dass der Mikrokanal 5 innerhalb des Siliziumwafers 22 ohne Verbindung zur Oberfläche desselben, d.h. in hermetisch dichter Weise entsteht. Um Rauheiten auf der Oberfläche der abgeschiedenen Polysilizium-Schicht 25 zu reduzieren, kann optional ein Polierschritt d) eingefügt werden. Anschließend wird der eigentliche Mikroaktuator 1 aus dem Siliziumwafer 22 strukturiert, wodurch der Chiprahmen 4, die Spiegelplatte 2 und die Federelemente 3 hergestellt werden. Auf den Siliziumwafer 22 bzw. den daraus hergestellten Chiprahmen 4 werden Glasdeckel 8, 9 mit tiefen Kavitäten aufgebondet, wodurch der Mikroaktuator 1 in einem Hohlraum 10 verkapselt wird.

Wie in der Mikroelektronik üblich, wird eine Vielzahl von Mikrospiegelanordnungen auf einem Siliziumwafer gemäß den Schritten a) bis f) hergestellt, wobei ebenfalls eine Vielzahl von Glasdeckeln 8 auf einem Glasdeckel-Wafer angeordnet ist. Die entsprechend Schritt f) hergestellten Wafer-Verbund wird dann zu der Vielzahl von Mikrospiegelanordnungen 100 vereinzelt, wobei bei der Vereinzelung die Mikrokanäle 5 freigelegt werden, d.h. die Ein- und Auslassöffnungen gebildet werden.

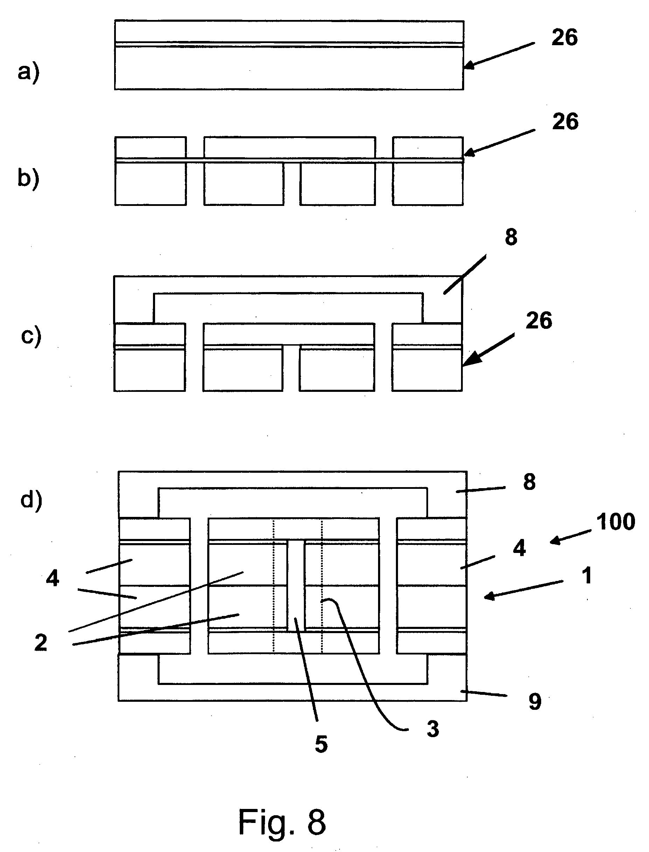

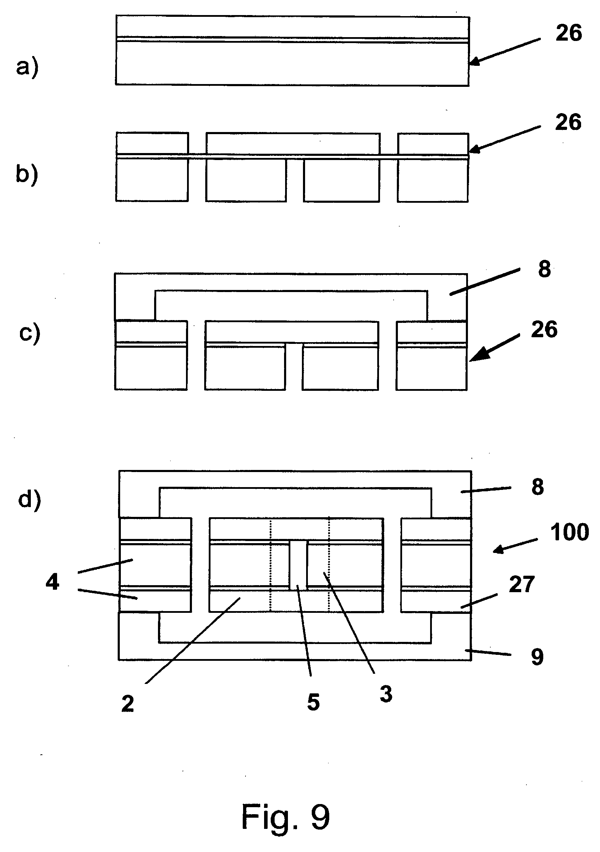

Ein weiteres Verfahren ist in den Fign. 8 und 9 dargestellt, wobei sich Fig. 8 zu der Fig. 9 lediglich im letzten Schritt unterscheidet. In Fig. 8 wird als Ausgangsschritt a) ein Silicon-Insulator-Wafer 26 als Ausgangsmaterial bereitgestellt, der üblicherweise aus einer Siliziumschicht, einem Isolator, d.h. einem Siliziumdioxid und einer weiteren Siliziumschicht gebildet wird. In Schritt b) wird der Wafer 26 durch anisotropes Plasmaätzen beidseitig strukturiert, wodurch die Geometrie des Mikroaktuators 1 und der Querschnitt des Mikrokanals 5 definiert werden. Zwischen Schritt b) und Schritt c) wird die dünne Isolator-Membran, vorzugsweise in gasförmiger Flusssäure entfernt. In Schritt c) wird ein Glasdeckelwafer mit tiefen Kavitäten als Deckel 8 aufgebondet. Um in Schritt d) die eigentliche Mikrospiegelanordnung mit Mikroaktuator herzustellen, werden zwei solcher gemäß Schritt c) dargestellter verbondeter Glas- und Siliziumwafer mit ihren Unterseiten justiert miteinander so verbondet, dass der Mikrokanal 5 hermetisch abgeschlossen wird und die Mikrospiegelanordnung 100 mit Mikroaktuator 1, Chiprahmen 4, Spiegelplatte 2 und Federelementen 3 gebildet wird. Wie schon ausgeführt, wird auch hier eine Vielzahl von Mikrospiegelanordnungen 100 auf einem Wafer mit entsprechenden Deckelwafern hergestellt und dann vereinzelt, wobei der Kanal 5 jeweils zugänglich gemacht wird.

Wie ausgeführt, entsprechen in Fig. 9 die Schritte a) bis c) denen der Fig. 8. In Schritt d) wird jedoch ein Waferverbund aus einem weiteren Silizium-Wafer 27, der durch anisotropes Plasmaätzen nur mit den Mikroaktuator-Geometrien durch Strukturieren versehen wurde, ohne jedoch einen Mikrokanal zu übertragen, und einem Glasdeckel 9, der mit dem Siliziumwafer 27 verbondet wurde, mit dem Wafer-Verbund nach a) bis c) justiert verbondet. Dabei wird der Mikrokanal 5 hermetisch abgeschlossen und eine Mikrospiegelanordnung 100 gebildet. Ebenso wie in Fig. 8 wird eine Vielzahl von Mikrospiegelanordnungen 100 auf einem Wafer hergestellt und vereinzelt, wodurch wiederum die jeweiligen Mikrokanäle 5 freigesetzt werden.

In der obigen Beschreibung wurden unterschiedliche Merkmale bei unterschiedlichen Ausführungsbeispielen erwähnt. Selbst wenn ein Merkmal nur für ein Ausführungsbeispiel beschrieben wurde, ist es für alle anderen Ausführungsbeispiele anwendbar, so dass Mikrospiegelanordnungen mit unterschiedlichen Kombinationen von beschriebenen Merkmalen vorgesehen werden können.

## Patentansprüche

1. Mikrospiegelanordnung mit mindestens einer in einem Chiprahmen (4) über ein oder mehrere Federelemente (3) schwingfähig aufgehängten Spiegelplatte (2),
**dadurch gekennzeichnet,**
**dass** mindestens ein mit einer Ein- und Auslassöffnung (6, 7) versehener hermetisch dichter Mikrokanal (5) zum Durchleiten eines strömenden Kühlmediums in dem Chiprahmen (4) und in dem einen oder den mehreren Federelementen (3) oder in dem Chiprahmen (4), in dem einen oder den mehreren Federelementen (3) und in der mindestens einen Spiegelplatte (2) angeordnet ist.

2. Mikrospiegelanordnung nach Anspruch 1, **dadurch gekennzeichnet, dass** die Ein- und die Auslassöffnung (6, 7) an einer Seite des Chiprahmens (4) oder an unterschiedlichen Seiten des Chiprahmens (4) angeordnet sind.

3. Mikrospiegelanordnung nach Anspruch 1 oder Anspruch 2, **dadurch gekennzeichnet, dass** die Ein- und/oder die Auslassöffnung (6, 7) des mindestens einen Mikrokanals in Längsrichtung des sich an die jeweilige Öffnung (6, 7) anschließenden Teils des Mikrokanals (5) gerichtet ist.

4. Mikrospiegelanordnung nach Anspruch 1 oder Anspruch 2, **dadurch gekennzeichnet, dass** die Ein- und/oder die Auslassöffnung (6, 7) des mindestens einen Mikrokanals in einer zu der Längsrichtung mit einem nicht verschwindenden Winkel, vorzugsweise mit einem Winkel von 90°, abgewinkelten Richtung gerichtet ist.

5. Mikrospiegelanordnung nach einem der Ansprüche 1 bis 4, **dadurch gekennzeichnet, dass** der mindestens eine Mikrokanal (5) in dem Chiprahmen (4) und/oder dem einen oder mehreren Federelementen (3) und/oder der Spiegelplatte (2) schleifenförmig oder verzweigt ausgebildet ist.

6. Mikrospiegelanordnung nach einem der Ansprüche 1 bis 5, **dadurch gekennzeichnet, dass** der Chiprahmen oberseitig und/oder unterseitig mit einem mit einer Kavität versehenen Deckel (8, 9) verbunden ist, derart, dass zumindest ein Teil des Chiprahmens (4), das eine oder die mehreren Federelemente (3) und die mindestens eine Spiegelplatte (2) in einem Hohlraum (10) gekapselt sind.

7. Mikrospiegelanordnung nach Anspruch 6, **dadurch gekennzeichnet, dass** die Kapselung hermetisch dicht ist und dass der Hohlraum (10) vorzugsweise mittels eines Getters unter Vakuum gesetzt ist oder mit Luft oder einem anderen Gas, wie Helium, gefüllt ist.

8. Mikrospiegelanordnung nach einem der Ansprüche 1 bis 7, **dadurch gekennzeichnet, dass** die Einlassöffnung (6) mit einer Zuleitung (11) zum Zuführen des strömenden Kühlmediums und die Auslassöffnung (7) mit einer Abführleitung (12) zum Abführen des Kühlmediums verbunden sind.

9. Verfahren zur Herstellung einer Mikrospiegelanordnung nach einem der Ansprüche 1 bis 8, **gekennzeichnet durch** folgende Schritte:
i) Strukturieren der Oberfläche eines Siliziumwafers unter Verwendung eines Plasmaätzens, vorzugsweise eines anisotropen Plasmaätzens entsprechend dem geometrischen Verlauf des Mikrokanals (5),
ii) Herstellen eines Hohlraums unterhalb der bei Schritt i) eingebrachten Struktur unter Verwendung eines Plasmaätzen, vorzugsweise eines isotropen Plasmaätzens,
iii) Abscheiden einer Polysiliziumschicht, wodurch die Struktur zur Oberfläche des Siliziumwafers (22) verschlossen wird und ein Teil des Hohlraums (24) verbleibt,
iv) Ätzen der Struktur eines Mikroaktuators (1) aus Chiprahmen (4), dem oder den Federelementen (3) und der mindestens einen Spiegelplatte (2),
v) Verkapseln des Mikroaktuators (1) **durch** Verbonden des Siliziumwafers mit einem eine Kavität aufweisenden Deckel und/oder einem weiteren Siliziumwafer und/oder einem weiteren eine Kavität aufweisenden Deckel.

10. Verfahren nach Anspruch 9, **dadurch gekennzeichnet, dass** die abgeschiedene Polysiliziumschicht poliert wird.

11. Verfahren zur Herstellung einer Mikrospiegelanordnung nach einem der Ansprüche 1 bis 8, **gekennzeichnet durch** folgende Schritte:
i) Ätzen der Struktur eines Mikroaktuators (1) aus Chiprahmen (4), dem oder den Federelementen (3) und der mindestens einen Spiegelplatte (2) von einer oder beiden Oberflächen eines Siliziumwafers (26) und Ätzen des Querschnitts des Mikrokanals (5) von einer Oberfläche des Siliziumwafers bis zu einer vorgegebenen Tiefe,
ii) Aufbonden eines mit einer Kavität versehenen Deckels (8, 9) auf die Oberfläche des strukturierten Siliziumwafers (26), die der Oberfläche gegenüberliegt, von der der Mikrokanal (5) geätzt wurde,
iii) Verschließen des geätzten Querschnitts des Mikrokanals (5) **durch** Verbonden des gemäß den Schritten i) und ii) hergestellten Siliziumwafers (26) mit einem weiteren, entsprechend der Struktur des Mikroaktuators (1) geätzten Siliziumwafer.

12. Verfahren nach Anspruch 11, **dadurch gekennzeichnet, dass** der weitere Siliziumwafer mit den Schritten i) und ii) hergestellt wird und die zwei strukturierten Siliziumwafer mit ihren Oberflächen, von denen her der Mikrokanal (5) geätzt wurde, so miteinander verbondet werden, dass der Mikrokanal (5) hermetisch dicht abgeschlossen wird.

13. Verfahren nach einem der Ansprüche 9 bis 12, **dadurch gekennzeichnet, dass** der oder die Deckel (8, 9) als Glasdeckel-Wafer ausgebildet sind.

14. Verfahren nach einem der Ansprüche 9 bis 13, **dadurch gekennzeichnet, dass** eine Vielzahl von Mikrospiegelanordnungen in einem durchgehenden Waferverbund hergestellt wird, wobei bei Vereinzeln des Waferverbundes die Mikrokanäle der einzelnen Mikrospiegelanordnungen zugänglich gemacht werden.

## Claims

1. A micromirror arrangement with at least one mirror plate (2) which is oscillatorily suspended in a chip frame (4) via one or more spring elements (3),
**characterised in that**
at least one hermetically sealed microchannel (5) which is provided with an inlet opening and an outlet opening (6, 7) and is for leading through a flowing coolant is arranged in the chip frame (4) and in the one or more spring elements (3) or in the chip frame (4), in the one or the several spring elements (3) and in the at least one mirror plate (2).

2. A micromirror arrangement according to claim 1, **characterised in that** the inlet opening and the outlet opening (6, 7) are arranged on a side of the chip frame (4) or on different sides of the chip frame (4).

3. A micromirror arrangement according to claim 1 or 2, **characterised in that** the inlet opening and/or the outlet opening (6, 7) of the at least one microchannel is directed in the longitudinal direction of the part of the microchannel (5) which connects to the respective opening (6, 7).

4. A micromirror arrangement according to claim 1 or 2, **characterised in that** the inlet opening and/or the outlet opening (6, 7) of the at least one microchannel is directed in a direction angled to the longitudinal direction at a non-negligible angle, preferably at an angle of 90°

5. A micromirror arrangement according to one of the claims 1 to 4, **characterised in that** the at least one microchannel (5) in the chip frame (4) and/or in the one or more spring elements (3) and/or in the mirror plate (2) is designed in a loop-like or branched manner.

6. A micromirror arrangement according to one of the claims 1 to 5, **characterised in that** the chip frame at the upper side and/or at the lower side is connected to a cover (8, 9) provided with a cavity, in a manner such that at least a part of the chip frame (4), the one or more spring elements (3) and the at least one mirror plate (2) are encapsulated in a cavity (10).

7. A micromirror arrangement according to claim 6, **characterised in that** the encapsulation is hermetically sealed and that the cavity (10) preferably by way of a getter is subjected to a vacuum or is filled with air or another gas such a helium.

8. A micromirror arrangement according to one of the claims 1 to 7, **characterised in that** the inlet opening (6) is connected to a feed conduit (11) for feeding the flowing coolant, and the outlet opening (7) is connected to a discharge conduit (12) for the discharge of the coolant.

9. A method for manufacturing a micromirror arrangement according to one of the claims 1 to 8, **characterised by** the following steps:
i) structuring the surface of a silicon wafer amid the application of plasma etching, preferably an anisotropic plasma etching, according to the geometric course of the microchannel (5),
ii) creating a cavity below the structure incorporated with step i), amid the application of plasma etching, preferably isotropic plasma etching,
iii) depositing a polysilicon layer, by which means the structure is closed to the surface of the silicon wafer (22), and a part of the cavity (24) remains,
iv) etching the structure of a microactuator (1) consisting of the chip frame (4), the spring element or spring elements (3) and the at least one mirror plate (2),
v) encapsulating the microactuator (1) by way of bonding the silicon wafer to a cover comprising a cavity and/or to a further silicon wafer and/or to a further cover comprising a cavity.

10. A method according to claim 9, **characterised in that** the deposited polysilicon layer is polished.

11. A method for manufacturing a micromirror arrangement according to one of the claims 1 to 8, **characterised by** the following steps:
i) etching the structure of a microactuator (1) consisting of the chip frame (4), the spring element or spring elements (3) and the at least one mirror plate (2), from one or both surfaces of a silicon wafer (26) and etching the cross section of the microchannel (5) from a surface of the silicon wafer up to a defined depth,
ii) bonding a cover (8, 9) which is provided with a cavity, onto the surface of the structured silicon wafer (26) which lies opposite the surface from which the microchannel (5) was etched,
iii) closing the etched cross section of the microchannel (5) by way of bonding the silicon wafer (26) produced according to steps i) and ii), with a further silicon wafer etched according to the structure of the microactuator (1).

12. A method according to claim 11, **characterised in that** the further silicon wafer is created with the steps i) and ii), and the two structured silicon wafers with their surfaces, from which the microchannel (5) was etched, are bonded to one another such that the microchannel (4) is closed off in a hermetically sealed manner.

13. A method according to one of the claims 9 to 12, **characterised in that** the cover or the covers (8, 9) are designed as glass cover wafers

14. A method according to one of the claims 9 to 13, **characterised in that** a multitude of micromirror arrangements are manufactured in a continuous wafer composite, wherein the microchannels of the individual micromirror arrangements are rendered accessible on singularisation of the wafer composite.

## Revendications

1. Dispositif à micro-miroir avec au moins une plaque de miroir (2) suspendue de manière oscillante dans un encadrement de puce (4) par l'intermédiaire d'un ou plusieurs éléments à ressorts (3),
**caractérisé en ce que**
au moins un micro-canal (5) hermétique muni d'une ouverture d'entrée et de sortie (6, 7) est disposé dans l'encadrement de puce (4) et dans un ou dans les plusieurs éléments à ressorts (3) ou dans l'encadrement de puce (4), dans un ou dans les plusieurs éléments à ressorts (3) et dans l'au moins une plaque de miroir (2) pour la conduite d'un fluide de refroidissement circulant.

2. Dispositif à micro-miroir selon la revendication 1, **caractérisé en ce que** l'ouverture d'entrée et de sortie (6, 7) est disposée sur un côté de l'encadrement de puce (4) ou sur différents côtés de l'encadrement de puce (4).

3. Dispositif à micro-miroir selon la revendication 1 ou la revendication 2, **caractérisé en ce que** l'ouverture d'entrée et/ou l'ouverture de sortie (6, 7) de l'au moins un micro-canal est orientée dans la direction longitudinale de la partie du micro-canal (5) se raccordant à l'ouverture (6, 7) correspondante.

4. Dispositif à micro-miroir selon la revendication 1 ou la revendication 2, **caractérisé en ce que** l'ouverture d'entrée et/ou l'ouverture de sortie (6, 7) de l'au moins un micro-canal est orientée dans une direction formant un angle non nul par rapport à la direction longitudinale, de préférence avec un angle de 90°.

5. Dispositif à micro-miroir selon l'une des revendications 1 à 4, **caractérisé en ce que** l'au moins un micro-canal (5) est conçu sous forme bouclée ou ramifiée dans l'encadrement de puce (4) et/ou dans un ou dans les plusieurs éléments à ressorts (3) et/ou dans la plaque de miroir (2).

6. Dispositif à micro-miroir selon l'une des revendications 1 à 5, **caractérisé en ce que** l'encadrement de puce est relié, en haut et/ou en bas, avec un couvercle (8, 9) muni d'une cavité, de façon à ce qu'au moins une partie de l'encadrement de puce (4), un ou les plusieurs éléments à ressorts (3) et l'au moins une plaque de miroir (2) sont encapsulés dans un espace creux (10).

7. Dispositif à micro-miroir selon la revendication 6, **caractérisé en ce que** l'encaspulation est hermétique et **en ce que** l'espace creux (10) est constitué de préférence d'un sorbeur sous vide ou est rempli d'air ou d'un autre gaz, comme de l'hélium.

8. Dispositif à micro-miroir selon l'une des revendications 1 à 7, **caractérisé en ce que** l'ouverture d'entrée (6) est reliée avec une conduite d'alimentation (11) pour l'alimentation du fluide de refroidissement qui s'écoule et l'ouverture de sortie (7) est relié avec une conduite d'évacuation (12) pour l'évacuation du fluide de refroidissement.

9. Procédé de fabrication d'un dispositif à micro-miroir selon l'une des revendications 1 à 8, **caractérisé par** les étapes suivantes :
i) structuration de la surface d'une tranche de silicium au moyen d'une gravure par plasma, de préférence d'une gravure par plasma anisotrope conformément au contour géométrique du micro-canal (5),
ii) réalisation d'un espace creux en dessous de la structure réalisée à l'étape i) au moyen d'une gravure par plasma, de préférence d'une gravure par plasma isotrope,
iii) dépôt d'une couche de polysilicium, ce qui permet de sceller la structure de surface de la tranche de silicium (22) et de conserver une partie de l'espace creux (24),
iv) gravure de la structure d'un micro-actionneur (1) constitué de l'encadrement de puce (4), du ou des éléments à ressorts (3) et de l'au moins une plaque de miroir (2),
v) encapsulation du micro-actionneur (1) par liaison de la tranche de silicium avec un couvercle comprenant une cavité et/ou une autre tranche de silicium et/ou un autre couvercle comprenant une cavité.

10. Procédé selon la revendication 9, **caractérisé en ce que** la couche de polysilicium déposée est polie.

11. Procédé de fabrication d'un dispositif à micro-miroir selon l'une des revendications 1 à 8, **caractérisé par** les étapes suivantes :
i) gravure de la structure d'un micro-actionneur (1) constitué de l'encadrement de puce (4), du ou des éléments à ressorts (3) et de l'au moins une plaque de miroir (2) à partir d'une ou des deux surfaces d'une tranche de silicium (26) et gravure de la section transversale du micro-canal (5) à partir d'une surface de la tranche de silicium jusqu'à une profondeur prédéterminée,
ii) liaison d'un couvercle (8, 9) muni d'une cavité sur la surface de la tranche de silicium structurée (26), qui est superposée à la surface à partir de laquelle le micro-canal (5) a été gravé,
iii) scellement de la section transversale gravée du micro-canal (5) par liaison de la tranche de silicium (26) réalisée selon les étapes i) et ii) avec une autre tranche de silicium gravée conformément à la structure du micro-actionneur (1).

12. Procédé selon la revendication 11, **caractérisé en ce que** l'autre tranche de silicium est réalisée avec les étapes i) et ii) et les deux tranches de silicium structurées, avec leurs surfaces à partir desquelles le micro-canal (5) a été gravé, sont liées entre elles de façon à ce que le micro-canal (5) soit scellé de manière hermétique.

13. Procédé selon l'une des revendications 9 à 12, **caractérisé en ce que** le ou les couvercles (8, 9) sont conçus comme des tranches de couvercles de verre.

14. Procédé selon l'une des revendications 9 à 13, **caractérisé en ce qu'**une pluralité de dispositif à micro-miroirs sont fabriqués à partir d'un composite de tranche continu, les micro-canaux des différents dispositifs à micro-miroirs étant rendus accessibles par la séparation du composite de tranche.
